# EUROPÄISCHE PATENTSCHRIFT

(11) **EP 2 346 670 B1**
(45) Veröffentlichungstag und Bekanntmachung des Hinweises auf die Patenterteilung: **03.04.2013**
(21) Anmeldenummer: 10763125.1
(22) Anmeldetag: 27.09.2010
(51) Int. Cl.: B29C 67/00, G06K 19/06

(54) **VERFAHREN UND VORRICHTUNG ZUM GENERATIVEN HERSTELLEN EINES DREIDIMENSIONALEN OBJEKTS MIT DREIDIMENSIONAL KODIERTEM ZEICHEN**
METHOD AND DEVICE FOR THE GENERATIVE PRODUCTION OF A THREE-DIMENSIONAL OBJECT WITH THREE-DIMENSIONALLY CODED MARKING
PROCÉDÉ ET DISPOSITIF DE PRODUCTION GÉNÉRATIVE D'UN OBJET TRIDIMENSIONNEL POURVU D'UNE MARQUE CODÉE EN TROIS DIMENSIONS

(30) Priorität: 28.09.2009 DE 102009043317
(43) Veröffentlichungstag der Anmeldung: 27.07.2011
(73) Patentinhaber: EOS GmbH Electro Optical Systems, 82152 Krailling (DE)
(72) Erfinder: HÜMMELER, Ludger, 57368 Lennestadt (DE); PFEFFERKORN, Florian, 80689 München (DE); SEMMLER, Manfred, 87700 Memmingen (DE); SCHMIDTNER, Markus, 86899 Landsberg am Lech (DE); FROHNMAIER, Markus, 81379 München (DE)
(74) Vertreter: Hofer, Dorothea
(86) Internationale Anmeldenummer: PCT/EP2010/005889
(87) Internationale Veröffentlichungsnummer: WO 2011/035931

(56) Entgegenhaltungen:
- EP-A1- 1 358 855
- EP-A1- 2 023 264
- WO-A1-01/61619
- WO-A1-2005/099635
- WO-A1-2007/028510
- WO-A1-2007/134688
- WO-A1-2010/075881
- US-A1- 2005 275 129
- US-A1- 2008 121 727

## Beschreibung

Die vorliegende Erfindung bezieht sich auf ein Verfahren und auf eine Vorrichtung zum Herstellen eines dreidimensionalen Objekts.

WO 2005/099635 A1 beschreibt ein Verfahren zum Herstellen eines dreidimensionalen Objekts, das im Inneren eine identifizierbare Struktur enthält. Die identifizierbare Struktur besteht aus einem Kontrastmittel und kann zum Beispiel durch Röntgenstrahlen betrachtet werden. US-6,939,501 B2 beschreibt eine Halbleitervorrichtung, auf der mittels Stereolithografie eine Buchstaben- oder Ziffernfolge aufgesetzt wird. WO 02/24127 A2 beschreibt ein Verfahren zur Fertigung einer Otoplastik, insbesondere eines In-Ohr-Hörgeräts, zum Beispiel durch Lasersintern, wobei die Otoplastik an der Oberfläche Einkerbungen und/oder Auswölbungen aufweist. Die Einkerbungen und/oder Auswölbungen definieren eine maschinell lesbare Kennzeichnung der Otoplastik. Die Einkerbungen und/oder Auswölbungen sind üblicherweise zweidimensional kodiert, da sie Informationen tragen, die durch die Länge und Tiefe der Einkerbungen und/oder Auswölbungen definiert sind.

Beim Lasersintern müssen die hergestellten Objekte für die Qualitätssicherung üblicherweise gekennzeichnet werden. Bisher geschah dies durch eine Beschriftung (Label), die durch eine auf oder in das Objekt gesinterte Buchstaben- und Zahlenfolge besteht. Die Beschriftung soll durch die Lasersintervorrichtung direkt an den Objekten erzeugt werden, da eine nachträgliche Zuordung der Informationen zu den Objekten kaum mehr möglich ist, wenn viele Objekte (zum Beispiel einige Hundert) in einem Job hergestellt werden und die Objekte dann der Lasersintervorrichtung entnommen werden. Die Objekte können dann nicht mehr eindeutig dem Job und der vorherigen Lage im Bauraum zugeordnet werden. Ein weiteres Problem tritt bei kleineren Objekten auf, die nur wenig Platz für die Beschriftung bieten. Prozessbedingt kann die Beschriftung außerdem nur mit einer bestimmten Breite, Höhe und Auflösung vorgesehen werden.

Ein gattungsgemäßes Verfahren zum generativen Herstellen eines dreidimensionalen Objekts gemäß dem Oberbegriff des Anspruchs 1 und eine Vorrichtung gemäß dem Oberbegriff des Anspruchs to sing aus der EP 1 358 855 A1 bekannt. Bei diesem Verfahren wird ein Pulvermaterial auf einem Träger einer Vorrichtung oder einer zuvor aufgetragenen Schicht schichtweise aufgetragen, und das Pulvermaterial wird durch energiehaltige Strahlung verfestigt. Die so hergestellten Objekte werden durch die energiehaltige Strahlung mit einer Buchstaben- und Zahlenkombination versehen.

Es ist die Aufgabe der vorliegenden Erfindung, ein Verfahren und eine Vorrichtung zum Herstellen eines dreidimensionalen Objekts vorzusehen, die das Objekt mit möglichst vielen Informationen kennzeichnen können.

Diese Aufgabe wird durch das Verfahren zum Herstellen eines dreidimensionalen Objekts mit den Merkmalen des Anspruchs 1 und durch die Vorrichtung zum Herstellen eines dreidimensionalen Objekts mit den Merkmalen des Anspruchs 10 gelöst.

In vorteilhafter Weise ist durch die Kennzeichnung eine Rückverfolgung (Tracking) der Objekte möglich. Vorteilhafte Weiterbildungen sind Gegenstand der Unteransprüche.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Ansicht einer Vorrichtung zum Herstellen eines dreidimensionalen Objekts gemäß der vorliegenden Erfindung;
- Fig. 2: eine Draufsicht eines dreidimensional kodierten Zeichens gemäß einem ersten Ausführungsbeispiel der vorliegenden Erfindung;
- Fig. 3: eine Schnittansicht des dreidimensional kodierten Zeichens gemäß dem ersten Ausführungsbeispiel der vorliegenden Erfindung;
- Fig. 4: eine Schnittansicht eines dreidimensional kodierten Zeichens gemäß einem zweiten Ausführungsbeispiel der vorliegenden Erfindung; und
- Fig. 5: eine Schnittansicht eines dreidimensional kodierten Zeichens gemäß einem dritten Ausführungsbeispiel der vorliegenden Erfindung.

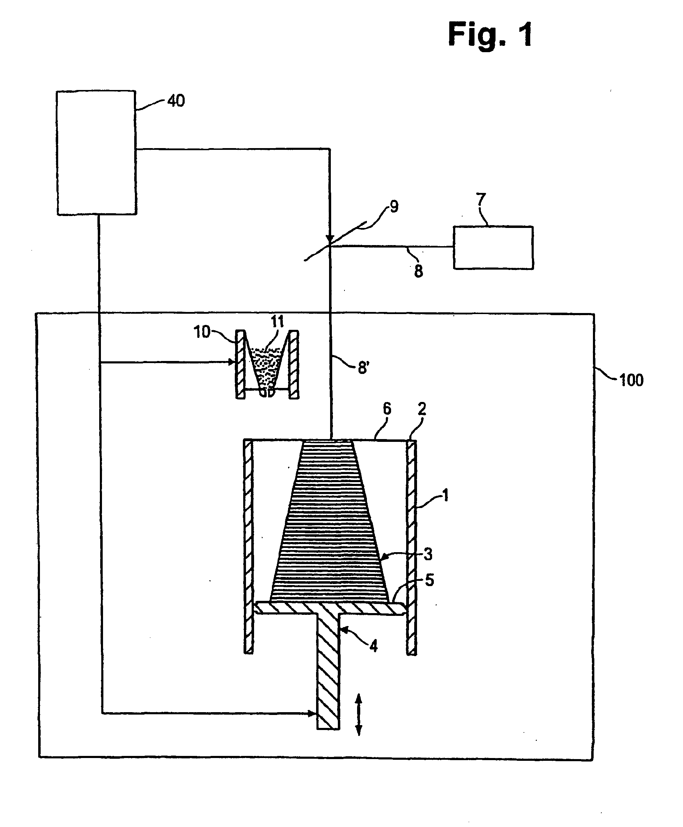

Die Fig. 1 zeigt eine schematische Ansicht einer Vorrichtung zum Herstellen eines dreidimensionalen Objekts 3 gemäß der vorliegenden Erfindung, die im Ausführungsbeispiel als Lasersintervorrichtung ausgebildet ist.

Die Lasersintervorrichtung weist einen nach oben hin offenen Rahmen 1 mit einer darin befindlichen, in vertikaler Richtung bewegbaren Plattform 5 auf, die das herzustellende dreidimensionale Objekt 3 trägt. Der Rahmen 1 und die Plattform 5 definieren im Inneren einen Bauraum. Die Plattform 5 ist mit einer Hubmechanik 4 in Verbindung, die sie in vertikaler Richtung so verfährt, dass die jeweils zu verfestigende Schicht des Objekts 3 in einer Arbeitsebene 6 liegt.

Des Weiteren ist ein Beschichter 10 zum Aufbringen einer Schicht eines Pulvermaterials 11 vorgesehen. Als Pulvermaterial 11 können alle lasersinterbaren Pulver verwendet werden, wie zum Beispiel lasersinterbare Kunststoffe wie Polyamid, Polystyrol, und insbesondere Hochtemperatur-Kunststoffe wie PEEK, Metalle, Keramiken, Formsand und Verbundmaterialien. Als metallhaltiges Pulvermaterial kommen beliebige Metalle und deren Legierungen sowie Mischungen mit metallischen Komponenten oder mit nichtmetallischen Komponenten in Frage. Dem Rahmen 1 wird zunächst das Pulvermaterial 11 aus einem Vorratsbehälter des Beschichters 10 zugeführt. Der Beschichter 10 wird danach in einer vorbestimmten Höhe über einen oberen Rand 2 des Rahmens 1 in der Arbeitsebene 6 verfahren, so dass die Schicht des Pulvermaterials 11 mit einer definierten Höhe über der zuletzt verfestigten Schicht liegt. Die Vorrichtung weist des Weiteren einen Laser 7 auf, der einen Laserstrahl 8, 8' erzeugt, der durch eine Ablenkeinrichtung 9 auf beliebige Punkte in der Arbeitsebene 6 fokussiert wird. Dadurch kann der Laserstrahl 8, 8' das Pulvermaterial 11 an den Stellen selektiv verfestigen, die dem Querschnitt des herzustellenden Objekts 3 entsprechen.

Mit dem Bezugszeichen 100 ist eine Prozesskammer bezeichnet, in der der Rahmen 1, die Plattform 5, die Hubmechanik 4 und der Beschichter 10 angeordnet werden können. Die Prozesskammer 100 hat im oberen Bereich eine Öffnung zur Einleitung des Laserstrahls 8, 8'. Vorzugsweise wird ein Schutzgas in die Prozesskammer 100 eingeführt. Es ist ferner eine Steuereinheit 40 vorgesehen, über die die Vorrichtung in koordinierter Weise zum Durchführen des Bauprozesses gesteuert wird.

Bei dem Betrieb der Vorrichtung wird in einem ersten Schritt die Plattform 5 durch die Hubmechanik 4 soweit nach unten verfahren, bis ihre obere Seite um eine Schichtdicke unterhalb der Arbeitsebene 6 liegt. Dann wird durch den Beschichter 10 eine erste Schicht des Pulvermaterials 11 auf die Plattform 5 aufgebracht und geglättet. Daraufhin steuert die Steuereinheit 40 die Ablenkeinrichtung 9 derart, dass der abgelenkte Laserstrahl 8, 8' selektiv an den Stellen der Schicht des Pulvermaterials 11 auftrifft, die verfestigt werden sollen. Dadurch wird an diesen Stellen das Pulvermaterial 11 verfestigt bzw. gesintert, so dass hier das dreidimensionale Objekt 3 entsteht.

In einem nächsten Schritt wird die Plattform 5 durch die Hubmechanik 4 um die Dicke der nächsten Schicht abgesenkt. Durch den Beschichter 10 wird eine zweite Pulvermaterialschicht aufgetragen, geglättet und mittels des Laserstahls 8, 8' selektiv verfestigt. Diese Schritte werden so oft durchgeführt, bis das gewünschte Objekt 3 hergestellt ist.

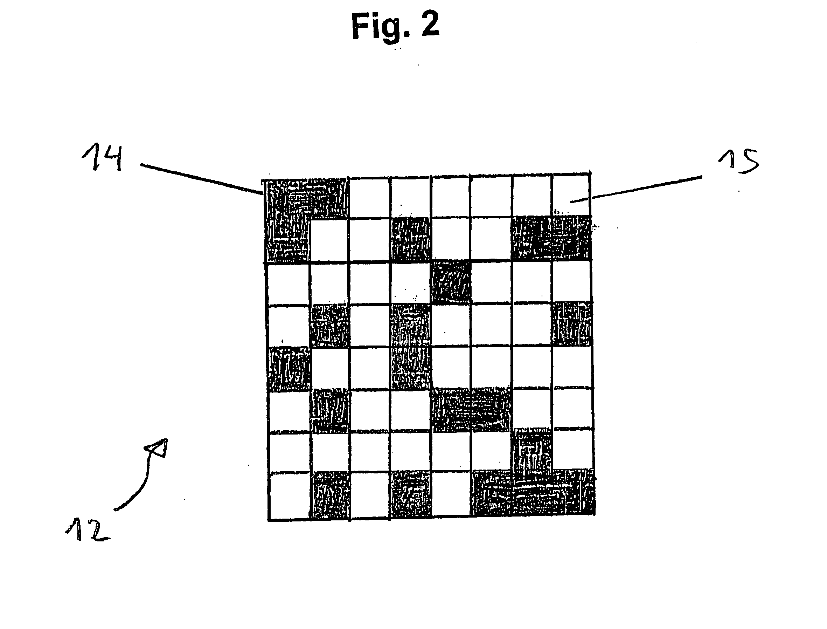

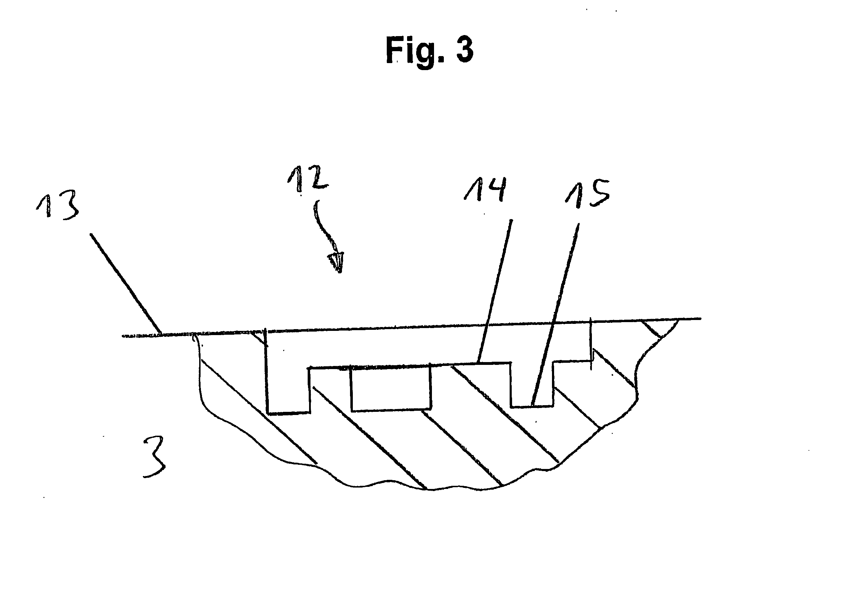

Die dreidimensionalen Objekte 3 haben gemäß der vorliegenden Erfindung ein digitales, maschinenlesbares und dreidimensional kodiertes Zeichen 12. Das Zeichen 12 enthält Informationen, wie zum Beispiel einen Zeitstempel, die Lage des Objekts 3 in der Vorrichtung, die Job-Nummer, das Material des Objekts 3, etc. Derartige Informationen können für die Qualitätssicherung verwendet werden. Die Fig. 2 zeigt eine Draufsicht des dreidimensional kodierten Zeichens 12 gemäß einem ersten Ausführungsbeispiel der vorliegenden Erfindung, und die Fig. 3 zeigt eine Schnittansicht des dreidimensional kodierten Zeichens 12 gemäß dem ersten Ausführungsbeispiel.

Im ersten Ausführungsbeispiel definiert das Zeichen 12 in einer Fläche 13 des dreidimensionalen Objekts 3 eine zweidimensionale Matrix 12, wobei die Matrix 12 eine vorgegebene Anzahl an Komponenten 14, 15 hat. Vorzugsweise ist die Matrix 12 größer als eine 2x2-Matrix, und im ersten Ausführungsbeispiel gemäß der Fig. 2 ist die Matrix 12 eine 8x8-Matrix. Die in der Fig. 2 gezeigten Komponenten 14, 15 der Matrix 12 können zum Beispiel jeweils Quadrate mit einer Kantenlänge von 0,8 mm sein. In vorteilhafter Weise ist die Rechenleistung der Steuereinheit 40 zum Herstellen der Matrix 12 relativ gering und konstant, wenn dies mit einer Rechenleistung für eine Zeichenkette aus Buchstaben und Zahlen verglichen wird.

Die Komponenten 14, 15 der Matrix 12 haben unterschiedliche Abstände (Höhen oder Tiefen) von der Fläche 13 des Objekts 3. Die Fig. 3 zeigt, dass die Matrix 12 erste Komponenten 14 mit einem ersten Abstand von der Fläche 13 des Objekts 3 und zweite Komponenten 15 mit einem zweiten Abstand von der Fläche 13 aufweist. Im ersten Ausführungsbeispiel bilden sowohl die ersten Komponenten 14 als auch die zweiten Komponenten 15 der Matrix 12 Vertiefungen in der Fläche 13 des Objekts 3. Jedoch haben die ersten Komponenten 14 der Matrix 12 einen kleineren Abstand von der Fläche 13 als die zweiten Komponenten 15 der Matrix 12.

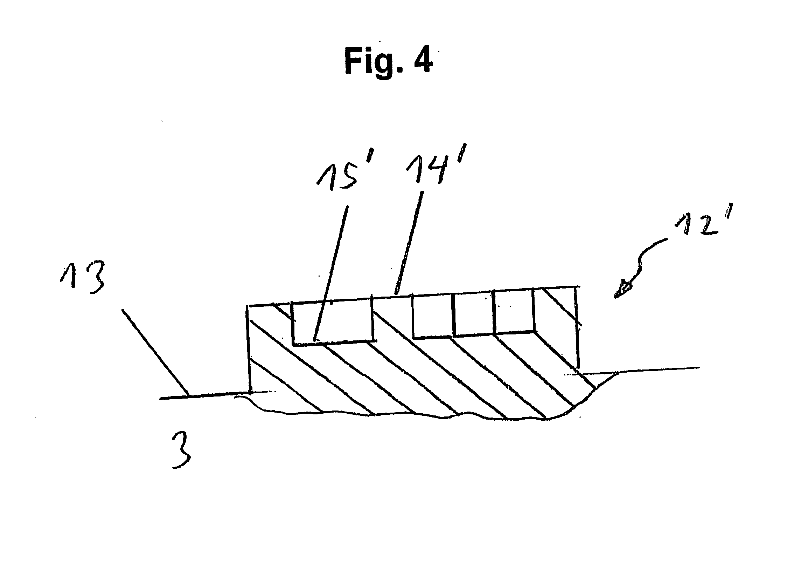

Die Fig. 4 zeigt eine Schnittansicht eines dreidimensional kodierten Zeichens 12' gemäß einem zweiten Ausführungsbeispiel der vorliegenden Erfindung, wobei sowohl die ersten Komponenten 14' als auch die zweiten Komponenten 15' der Matrix 12' Erhebungen von der Fläche 13 des Objekts 3 bilden. Jedoch haben die ersten Komponenten 14' der Matrix 12' einen größeren Abstand von der Fläche 13 des Objekts 3 als die zweiten Komponenten 15' der Matrix 12'.

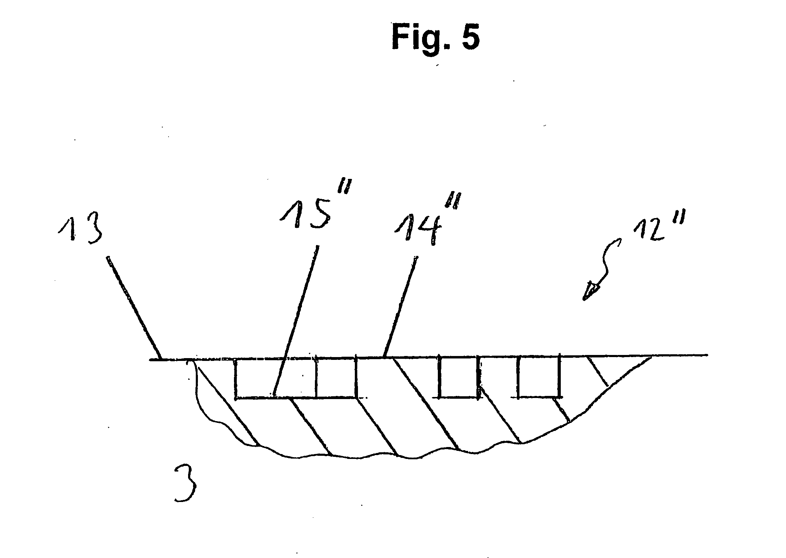

Die Fig. 5 zeigt eine Schnittansicht eines dreidimensional kodierten Zeichens 12 " gemäß einem dritten Ausführungsbeispiel der vorliegenden Erfindung, wobei die ersten Komponenten 14 " im wesentlichen bündig an der Fläche 13 des Objekts 3 ausgerichtet sind und die zweiten Komponenten 15 " in der Fläche 13 vertieft sind. In einer Abwandlung des dritten Ausführungsbeispiels können die zweiten Komponenten 15 " von der Fläche 13 erhaben sein, während die ersten Komponenten 14 " im wesentlichen bündig an der Fläche 13 ausgerichtet sind.

Gemäß der vorliegenden Erfindung sind die dreidimensional kodierten Zeichen 12; 12'; 12" digital und maschinenlesbar. Zum Beispiel kann eine erhabene bzw. höhere Komponente 14; 14'; 14'' der Matrix 12; 12'; 12 " die binäre 1 darstellen, während eine vertiefte bzw. tiefere Komponente 15; 15'; 15 " der Matrix 12; 12'; 12 " die binäre 0 darstellt, oder umgekehrt. Die in der Fig. 2 gezeigt 8x8-Matrix 12 definiert somit ein Wort mit 64 Bit.

Das Lesen des Zeichens 12; 12'; 12 " erfolgt maschinell, zum Beispiel durch Nadelabtastung, Laserabtastung oder mittels einer CCD-Kamera mit nachgeschalteter Mustererkennung. Damit das Zeichen 12; 12'; 12 " leichter lesbar ist, haben die die ersten Komponenten 14; 14'; 14 " der Matrix 12; 12'; 12 " vorzugsweise eine andere Oberflächenbeschaffenheit als die zweiten Komponenten 15; 15'; 15 " der Matrix 12; 12'; 12''. Die Oberflächenbeschaffenheit kann insbesondere eine Oberflächenrauhigkeit oder ein Reflexionsgrad sein.

Eine weitere Ausführungsform kann einen Schritt zum Färben eines Teils der Komponenten aufweisen. Dies kann bei dem zweiten Ausführungsbeispiel in der Fig. 4 zum Beispiel dadurch geschehen, dass das Zeichen 12' gegen ein mit Farbe oder Lack getränktes Stempelkissen gedrückt wird. Dadurch werden nur die ersten Komponenten 14' gefärbt.

Bei dem dritten Ausführungsbeispiel in der Fig. 5 kann eine Farbe oder ein Lack auf das Zeichen 12 " aufgetragen werden, und in einem nachfolgenden Schritt wird das Zeichen 12 " mit einem Wischer abgewischt, so dass die Farbe oder der Lack nur auf den vertieften zweiten Komponente 15 " der Matrix 12 " verbleibt.

Der Schutzumfang beschränkt sich nicht auf die dargestellten Ausführungsbeispiele, sondern er umfasst weitere Änderungen und Abwandlungen, sofern diese innerhalb des durch die beigefügten Ansprüche definierten Umfangs fallen.

Das erfindungsgemäße Verfahren ist nicht nur auf Lasersintern anwendbar, sondern auf alle pulverbasierten, generativen Verfahren, bei denen pro aufzutragender Schicht ein einziger Werkstoff bzw. ein einziges Pulvermaterial verwendet wird, welches durch den Energiestrahl verfestigt wird. Gegebenenfalls wird dem einzigen Werkstoff bzw. dem einzigen Pulvermaterial ein Aktivator zugegeben. Der Energiestrahl muss nicht unbedingt ein Laserstrahl sein, sondern er kann zum Beispiel auch ein Elektronenstrahl sein.

Die Struktur des digitalen, maschinenlesbaren und dreidimensional kodierten Zeichens 12 ist nicht auf die Form einer Matrix beschränkt. Stattdessen kann ein beliebiger 3D-Code verwendet werden.

## Patentansprüche

1. Verfahren zum generativen Herstellen eines dreidimensionalen Objekts (3) mittels einer Vorrichtung, mit den folgenden Schritten:
Schichtweises Auftragen eines Pulvermaterials (11) auf einem Träger (5) der Vorrichtung oder einer zuvor aufgetragenen Schicht;
Verfestigen des Pulvermaterials (11) durch energiehaltige Strahlung (8') an Stellen, die dem Objekt (3) entsprechen,
**dadurch gekennzeichnet, dass**
das Pulvermaterial (11) so verfestigt wird, dass ein digitales, maschinenlesbares und dreidimensional kodiertes Zeichen (12; 12'; 12 ") an einer Fläche (13) des Objekts (3) vorgesehen wird;
wobei das Zeichen (12; 12'; 12'') in der Fläche (13) des dreidimensionalen Objekts (3) eine zweidimensionale Matrix (12; 12'; 12'') definiert, wobei die Matrix (12; 12'; 12'') viele Komponenten (14; 14'; 14", 15; 15'; 15'') mit unterschiedlichen Abständen von der Fläche (13) des Objekts (3) hat.

2. Verfahren gemäß Anspruch 1, wobei die Matrix (12; 12' ; 12") erste Komponenten (14; 14'; 14") mit einem ersten Abstand von der Fläche (13) des Objekts (3) und zweite Komponenten (15; 15'; 15 ") mit einem zweiten Abstand von der Fläche (13) des Objekts (3) aufweist.

3. Verfahren gemäß Anspruch 2, wobei die ersten Komponenten (14") im Wesentlichen bündig an der Fläche (13) des Objekts (3) ausgerichtet sind und die zweiten Komponenten (15'') von der Fläche (13) des Objekts (3) erhaben oder in der Fläche (13) vertieft sind.

4. Verfahren gemäß einem der Ansprüche 1 bis 3, wobei die ersten Komponenten (14; 14'; 14") der Matrix (12; 12'; 12") eine andere Oberflächenbeschaffenheit als die zweiten Komponenten (15; 15'; 15'') der Matrix (12; 12'; 12") aufweisen.

5. Verfahren gemäß einem der Ansprüche 1 bis 4, des Weiteren mit einem Schritt zum Auftragen einer Farbe oder eines Lacks auf jene Komponenten, die einen bestimmten Abstand von der Fläche (13) des Objekts (3) haben.

6. Verfahren gemäß einem der Ansprüche 1 bis 5, wobei die Matrix (12; 12'; 12") von einem Rahmen umgeben ist, der eine andere Höhe oder Oberflächenbeschaffenheit als die Fläche (13) des Objekts (3) aufweist.

7. Verfahren gemäß einem der vorherigen Ansprüche, wobei pro Schicht nur ein einziges Pulvermaterial (11), das gegebenenfalls mit einem Aktivator versehen ist, verwendet wird.

8. Verfahren gemäß einem der Ansprüche 1 bis 7, wobei eine Komponente (14; 14'; 14", 15; 15'; 15") der Matrix (12; 12'; 12") eine binäre Information trägt.

9. Lasersinterverfahren als Verfahren gemäß einem der vorherigen Ansprüche.

10. Vorrichtung, die das Verfahren gemäß einem der vorherigen Ansprüche durchführt und Folgendes aufweist:
einen Beschichter (10) zum schichtweisen Auftragen eines Pulvermaterials (11) auf einen Träger (5) der Vorrichtung oder eine zuvor aufgetragene Schicht;
eine verfestigungsvorrichtung (7) zum Verfestigen des Pulvermaterials (11) durch energiehaltige Strahlung (8') an Stellen, die dem Objekt (3) entsprechen; und
eine Steuereinheit (40),
**dadurch gekennzeichnet, dass**
die Steuereinheit (40) die Vorrichtung derart steuert, dass das Pulvermaterial (11) so verfestigt wird, dass ein digitales, maschinenlesbares und dreidimensional kodiertes Zeichen (12; 12'; 12'') an einer Fläche (13) des Objekts (3) vorgesehen wird;
wobei das Zeichen (12; 12'; 12 ") in der Fläche (13) des dreidimensionalen Objekts (3) eine zweidimensionale Matrix (12; 12'; 12") definiert, wobei die Matrix (12; 12'; 12") viele Komponenten (14; 14'; 14", 15; 15'; 15") mit unterschiedlichen Abständen von der Fläche (13) des Objekts (3) hat.

## Claims

1. Method of generatively manufacturing a three-dimensional object (3) by means of a device, comprising the following steps:
layerwise applying a powdery material (11) onto a support (5) of the device or a previously applied layer;
solidifying the powdery material (11) by energetic radiation (8') at locations corresponding to the object (3),
**characterized in that**
the powdery material (11) is solidified such that a digital, machine-readable and three-dimensional encoded character (12; 12'; 12 ") is provided at a surface (13) of the object (3);
wherein the character (12; 12'; 12") defines a two-dimensional matrix (12; 12'; 12") in the surface (13) of the three-dimensional object (3), wherein the matrix (12; 12'; 12") has a plurality of components (14; 14'; 14 " , 15; 15'; 15") with different distances to the surface (13) of the object (3).

2. Method according to claim 1, wherein the matrix (12; 12'; 12") comprises first components (14; 14'; 14") with a first distance to the surface (13) of the object (3) and second components (15; 15'; 15") with a second distance to the surface (13) of the object (3).

3. Method according to claim 2, wherein the first components (14") are aligned to be substantially flush with the surface (13) of the object (3), and the second components (15'') are embossed from the surface (13) of the object (3) or recessed in the surface (13).

4. Method according to any one of claims 1 to 3, wherein the first components (14; 14'; 14") of the matrix (12; 12'; 12") comprise a different surface property than the second components (15; 15'; 15") of the matrix (12; 12'; 12").

5. Method according to any one of claims 1 to 4, further comprising a step of applying paint or varnish on those components which have a particular distance to the surface (13) of the object (3).

6. Method according to any one of claims 1 to 5, wherein the matrix (12; 12'; 12") is surrounded by a frame comprising a different height or surface property than the surface (13) of the object (3).

7. Method according to any one of the preceding claims, wherein only one powdery material (11), which is provided with an activator if necessary, is used per layer.

8. Method according to any one of claims 1 to 7, wherein a component (14; 14'; 14 " , 15; 15'; 15") of the matrix (12; 12'; 12") bears binary information.

9. Laser-sintering method as the method according to any one of the preceding claims.

10. Device which carries out the method according to any one of the preceding claims and comprises the following:
an applicator (10) for layerwise applying a powdery material (11) onto a support (5) of the device or a previously applied layer;
a solidification device (7) for solidifying the powdery material (11) by energetic radiation (8') at locations corresponding to the object (3); and
a control unit (40),
**characterized in that**
the control unit (40) controls the device such that the powdery material (11) is solidified such that a digital, machine-readable and three-dimensional encoded character (12; 12'; 12") is provided at a surface (13) of the object (3) ;
wherein the character (12; 12'; 12") defines a two-dimensional matrix (12; 12'; 12") in the surface (13) of the three-dimensional object (3), wherein the matrix (12; 12'; 12") has a plurality of components (14; 14'; 14", 15; 15'; 15") with different distances to the surface (13) of the object (3).

## Revendications

1. Procédé de fabrication générative d'un objet (3) tridimensionnel au moyen d'un dispositif, comportant les étapes suivantes :
application par couches d'une matière pulvérulente (11) sur un support (5) du dispositif ou sur une couche appliquée préalablement ;
solidification de la matière pulvérulente (11) par rayonnement (8') énergétique sur des emplacements correspondant à l'objet (3),
**caractérisé en ce que**
la matière pulvérulente (11) est solidifiée de manière à prévoir un caractère (12 ; 12' ; 12") numérique lisible machine et codé en trois dimensions sur une surface (13) de l'objet (3),
le caractère (12 ; 12'; 12") définissant une matrice (12 ; 12' ; 12") bidimensionnelle à la surface (13) de l'objet (3) tridimensionnel, la matrice (12 ; 12' ; 12") présentant plusieurs composants (14 ; 14' ; 14", 15 ; 15' ; 15") avec des espacements différents par rapport à la surface (13) de l'objet (3).

2. Procédé selon la revendication 1, dans lequel la matrice (12 ; 12' ; 12") comporte des premiers composants (14 ; 14' ; 14") avec un premier espacement à la surface (13) de l'objet (3) et des deuxièmes composants (15 ; 15' ; 15") avec un deuxième espacement à la surface (13) de l'objet (3).

3. Procédé selon la revendication 2, dans lequel les premiers composants (14") sont sensiblement affleurants à la surface (13) de l'objet (3), et dans lequel les deuxièmes composants (15") sont saillants sur la surface (13) de l'objet (3) ou évidés dans la surface (13).

4. Procédé selon l'une des revendications 1 à 3, dans lequel les premiers composants (14 ; 14' ; 14") de la matrice (12 ; 12' ; 12") présentent un autre état de surface que les deuxièmes composants (15 ; 15' ; 15") de la matrice (12 ; 12' ; 12").

5. Procédé selon l'une des revendications 1 à 4, comportant en outre une étape d'application d'une encre ou d'un vernis sur les composants présentant un espacement défini à la surface (13) de l'objet (3).

6. Procédé selon l'une des revendications 1 à 5, dans lequel la matrice (12 ; 12' ; 12") est entourée d'un cadre présentant une autre hauteur ou un autre état de surface que la surface (13) de l'objet (3).

7. Procédé selon l'une des revendications précédentes, dans lequel une seule matière pulvérulente (11), éventuellement pourvue d'un activateur, est utilisée par couche.

8. Procédé selon l'une des revendications 1 à 7, dans lequel un composant (14 ; 14' ; 14", 15 ; 15' ; 15") de la matrice (12 ; 12' ; 12") supporte une information binaire.

9. Procédé de frittage laser en tant que procédé selon l'une des revendications précédentes.

10. Dispositif exécutant le procédé selon l'une des revendications précédentes, et comportant les éléments suivants :
un applicateur (10) pour l'application par couches d'une matière pulvérulente (11) sur un support (5) du dispositif ou sur une couche appliquée préalablement ;
un dispositif de solidification (7) pour la solidification de la matière pulvérulente (11) par rayonnement (8') énergétique sur des emplacements correspondant à l'objet (3), et
une unité de commande (40),
**caractérisé en ce que**
l'unité de commande (40) commande ledit dispositif de manière à solidifier la matière pulvérulente (11) afin de prévoir un caractère (12 ; 12' ; 12") numérique lisible machine et codé en trois dimensions sur une surface (13) de l'objet (3) ;
le caractère (12 ; 12' ; 12") définissant une matrice (12 ; 12' ; 12") bidimensionnelle à la surface (13) de l'objet (3) tridimensionnel, la matrice (12 ; 12' ; 12") présentant plusieurs composants (14 ; 14' ; 14", 15 ; 15' ; 15") avec des espacements différents par rapport à la surface (13) de l'objet (3).
